# EUROPEAN PATENT APPLICATION

(11) **EP 4 439 123 A1**
(43) Date of publication of application: **02.10.2024**
(21) Application number: 24167084.3
(22) Date of filing: 27.03.2024
(51) Int. Cl.: G01S 13/931, B60W 60/00, G01S 17/931, G06F 1/00, G06F 1/20, G01S 7/02, G01S 7/48

(54) **METHODS AND SYSTEMS FOR MODIFYING POWER CONSUMPTION BY AN AUTONOMY SYSTEM**

(30) Priority: 29.03.2023 US 202318192431
(71) Applicant: Waymo LLC, Mountain View, CA 94043 (US)
(72) Inventor: THRASHER, Matthew Evan, Mountain View, CA 94043 (US); STROBEL, Andre Manfred, Mountain View, CA 94043 (US); JORGENSEN, Clayton Bryce, Mountain View, CA 94043 (US)
(74) Representative: Chettle, John Edward

(57) **Abstract**

Example embodiments relate to techniques for modifying power consumption of an autonomy system. For instance, a vehicle autonomy system may use sensor data from vehicle sensors to determine information about the surrounding environment and estimate one or more conditions expected for a threshold duration during subsequent navigation of the path by the vehicle. The autonomy system can then adjust operation of one or more of its components (sensors, compute cores, actuators) based on the one or more conditions expected for the threshold duration and power consumption data corresponding to the components. The vehicle can then be controlled based on subsequent sensor data obtained after adjusting operation of the components of the autonomy system thereby increasing the efficiency of the autonomy system in accordance with the vehicle's surrounding environment.

## Description

### BACKGROUND

Advancements in computing, sensors, and other technologies have enabled vehicles to safely navigate between locations autonomously, i.e., without requiring input from a human driver. By processing sensor measurements of the surrounding environment in near real-time, an autonomous vehicle can safely transport passengers or objects (e.g., cargo) between locations while avoiding obstacles, obeying traffic requirements, and performing other actions that are typically conducted by the driver. Shifting both decision-making and control of the vehicle over to vehicle systems can allow autonomous delivery of goods and enable the vehicle's passengers to devote their attention to tasks other than driving.

### SUMMARY

Example embodiments relate to techniques for modifying power consumption by an autonomy system. Disclosed techniques involve adjusting the power consumption of one or multiple components of an autonomy system (e.g., sensors, compute cores, and actuators) based on environment conditions predicted by the autonomy system. By adjusting power consumption of components in real-time, the autonomy system can increase power efficiency while also maintaining system performance sufficient to autonomously navigate the environment safely.

Accordingly, a first example embodiment describes a method. The method involves receiving, by an autonomy system coupled to a vehicle, sensor data obtained by one or more sensors as the vehicle navigates a path in an environment. The autonomy system comprises one or more compute cores and a plurality of sensors. The method also involves determining, by the autonomy system and based on the sensor data, information corresponding to one or more objects detected in the environment and estimating, based on the information corresponding to the one or more objects, one or more conditions expected for a threshold duration during subsequent navigation of the path. The method further involves adjusting, by the autonomy system, operation of one or more components of the autonomy system based on the one or more conditions expected for the threshold duration and respective power consumption data corresponding to the one or more components. The method also involves controlling the vehicle based on subsequent sensor data obtained after adjusting operation of the one or more components of the autonomy system.

Another example embodiment describes a vehicle. The vehicle includes an autonomy system comprising one or more compute cores and a plurality of sensors. The autonomy system is configured to: receive sensor data obtained by one or more sensors as the vehicle navigates a path in an environment, determine, based on the sensor data, information corresponding to one or more objects detected in the environment, and estimate, based on the information corresponding to the one or more objects, one or more conditions expected for a threshold duration during subsequent navigation of the path. The autonomy system is also configured to adjust operation of one or more components of the autonomy system based on the one or more conditions expected for the threshold duration and respective power consumption data corresponding to the one or more components and control the vehicle based on subsequent sensor data obtained after adjusting operation of the one or more components of the autonomy system.

An additional example embodiment describes a non-transitory computer-readable medium configured to store instructions, that when executed by an autonomy system, causes the autonomy system to perform operations. The operations involve receiving sensor data obtained by one or more sensors as a vehicle navigates a path in an environment, where the autonomy system comprises one or more compute cores and a plurality of sensors. The operations also involve determining, based on the sensor data, information corresponding to one or more objects detected in the environment and estimating, based on the information corresponding to the one or more objects, one or more conditions expected for a threshold duration during subsequent navigation of the path. The operations further involve adjusting operation of one or more components of the autonomy system based on the one or more conditions expected for the threshold duration and respective power consumption data corresponding to the one or more components. The operations also involve controlling the vehicle based on subsequent sensor data obtained after adjusting operation of the one or more components of the autonomy system.

The foregoing summary is illustrative only and is not intended to be in any way limiting. In addition to the illustrative aspects, embodiments, and features described above, further aspects, embodiments, and features will become apparent by reference to the figures and the following detailed description.

### BRIEF DESCRIPTION OF THE FIGURES

Figure 1 is a functional block diagram illustrating a vehicle, according to one or more example embodiments.
Figure 2A illustrates a front view of a vehicle, according to one or more example embodiments.
Figure 2B illustrates a side view of a vehicle, according to one or more example embodiments.
Figure 2C illustrates a perspective view of a vehicle, according to one or more example embodiments.
Figure 2D illustrates a top view of a vehicle, according to one or more example embodiments.
Figure 3 is a functional block diagram illustrating a computing device, according to one or more example embodiments.
Figure 4 is a functional block diagram illustrating an autonomy system that modifies power consumption according to environment conditions, according to one or more example embodiments.
Figure 5 is a functional block diagram illustrating a training phase and an inference phase for generating a trained machine learning model, according to one or more example embodiments.
Figure 6 is a flowchart of a method for modifying power consumption of an autonomy system, according to one or more example embodiments.
Figure 7 is a schematic diagram of a computer program, according to one or more example embodiments.

### DETAILED DESCRIPTION

In the following detailed description, reference is made to the accompanying figures, which form a part hereof. In the figures, similar symbols typically identify similar components, unless context dictates otherwise. The illustrative embodiments described in the detailed description, figures, and claims are not meant to be limiting. Other embodiments may be utilized, and other changes may be made, without departing from the scope of the subject matter presented herein. It will be readily understood that the aspects of the present disclosure, as generally described herein, and illustrated in the figures, can be arranged, substituted, combined, separated, and designed in a wide variety of different configurations, all of which are explicitly contemplated herein.

Autonomous navigation of a vehicle involves the use of various sensors, cameras, and algorithms to enable the vehicle to perceive and understand its environment, plan a path to the destination, and execute its plan. For instance, the vehicle can use one or more sensors, such as lidar, radar, cameras, and/or ultrasonic sensors, to gather data about its surroundings and create a map of the environment. The gathered information is used to detect obstacles, lane markings, traffic signals, and other relevant features. Based on the information gathered in the perception stage, the vehicle's navigation system can generate a plan for reaching the destination, which factors the vehicle's current position, the destination, and the map of the environment. The plan considers factors, such as the vehicle's speed, the road conditions, and traffic rules to generate a safe and efficient route. Once the plan is generated, the vehicle can execute it by using its actuators to control its acceleration, steering, and brakes. The vehicle constantly monitors its environment to ensure that it is following the planned path and to detect any changes in the road conditions. In addition, the vehicle's navigation system uses control algorithms to make adjustments to its motion in real-time via the actuators to ensure that it stays on the planned path. This involves continuously adjusting the vehicle's speed, direction, and trajectory to avoid obstacles, follow lane markings, and respond to changing traffic conditions. Overall, the combination of perception, planning, execution, and control can enable a vehicle to autonomously navigate its environment and reach its destination safely and efficiently.

In general, the autonomy system on a vehicle or another type of platform typically consists of one or multiple sensors, computers (e.g., compute cores), and actuators that are all powered by an onboard power source. In practice, the sensors can provide measurements of the environment and vehicle components, which can be processed by one or more computers to generate control instructions for the actuators. For instance, cameras and/or other types of sensors can capture images of the environment surrounding a vehicle, which can be processed by one or more onboard computers to detect and classify nearby objects in order to understand the environment for safe navigation. The onboard computers can provide control signals to the actuators in order to control the vehicle in accordance with road boundaries and objects in the environment.

Components of the autonomy system are usually powered by one or multiple onboard power sources, such as power generation typically provided by an engine via an alternator, via direct mechanical coupling, and/or from a high-voltage battery. These onboard power sources are often also used by the propulsion system of the vehicle to enable navigation. Thus, the total range that the vehicle is able to navigate without refueling (or recharging) can be impacted by the power consumption of components in the autonomous driving system enabling autonomous operations. In addition, in some cases, the more energy that is consumed by the autonomous driving system (compute, sensors and actuators), the more energy is also required to cool the autonomous driving system, which results in a compounding effect. Saving on the power requirements of the autonomous driving system is a critical factor for the viability and feasibility of operating an autonomous vehicle, especially for battery-electric autonomous vehicles. The trucking sector holds fuel economy as a principle consideration when considering autonomous operations. In some jurisdictions, regulations require corporations to report the secondary carbon emissions, like emissions from trucking, which means that fuel efficiency is becoming a more and more important consideration for companies. Owners of passenger vehicles might similarly seek to maximize fuel efficiency to decrease costs associated with using a vehicle.

Example embodiments presented herein relate to techniques for modifying energy consumption of an autonomy system, which may involve dynamically adjusting various parameters in real-time to cause components within the autonomy system to consume onboard energy efficiently while also enabling safe autonomous operations. Techniques for reducing power consumption by a vehicle autonomy system may involving adjusting one or multiple parameters based on the surrounding environment and/or predicted conditions expected for a subsequent portion of a route being navigated by the vehicle. For instance, parameters that can be adjusted to modify the autonomy system's power consumption include the number of sensors gathering data, the rate of data collection by one or more sensors, and other specific performance parameters of one or multiple sensors, such as the frequency of transmission and/or the field of view being measured by sensors. In addition, other parameters can be adjusted, such as parameters associated with processing incoming the sensor data, changing power settings of one or more compute cores, the number of powered compute cores being used by the autonomy system, clock speed of one or more compute cores, the amount of voltage supplied to one or more compute cores and/or other autonomy components, the frequency of use for the compute cooling system, the readiness/frequency of the cleaning system, and/or the power consumption of the actuators. As such, techniques can involve adjusting one or multiple parameters within different scenarios.

In general, different factors may be considered by the autonomous driving system to determine which parameters to adjust to improve power consumption efficiency by components of the autonomy system. For instance, the autonomous driving system may observe and react to the complexity and demands of the surrounding environment, such as objects in or next to the path of the autonomous vehicle, position of the autonomous vehicle relative to other status and dynamic objects, traffic density, speed of travel and its time derivatives, idling period, visibility and other weather related effects (e.g., wind), road geometry, need of situation matched for capability of different types of sensors (e.g., close-in sensing or long range sensing), health of the sensors, compute, and/or actuators of the autonomous vehicle. In some examples, the system may adjust performance and/or state of communication systems when wireless communication is not required.

Disclosed techniques can involve predicting environment conditions for a threshold duration of subsequent navigation and adjusting one or multiple parameters in real-time to optimize power consumption by the autonomy system while also enabling the autonomy system to effectively understand and safely navigate the surrounding environment. In some cases, a computing system may predict that the current environment and/or upcoming stretch of navigation increases in complexity due various factors, such as due to an increase in traffic, the roads becoming more winding or complex, poor visibility due to weather conditions, and/or other causes. In such situations, the computing system may increase power consumption by one or more components of the autonomy system to enable safe navigation during the complex environment. For instance, the computing system may increase the number of sensors obtaining sensor data, the frequency of collection of sensor data, and the clock speed and/or number of compute cores processing sensor measurements, among other changes. In other cases, the computing system may predict that the current environment and/or upcoming stretch of navigation decreases in complexity due to various factors, such as a decrease in traffic, a change in road type to a straight path on the freeway, and/or an improvement in weather conditions for sensor visibility, among other factors. As such, the computing system may cause one or more autonomy components to decrease power consumption by adjusting one or more parameters associated with using the autonomy system. For instance, the computing system can switch one or more components from a high power state to a lower power state, decrease a frequency of one or more sensors, decrease cleaning or cooling at one or more sensors or compute cores, and/or decrease power consumption at one or more compute cores.

In some examples, power consumption at one or more sensors can be adjusted, which can depend on the type of sensor. For instance, the autonomy system can adjust the sampling frequency of a sensor or sensors, which can adjust the amount of power consumed by the sensor. The autonomy system can switch one or more sensors into a sleep mode, which is a low-power sleep mode that can be activated when the sensors are not in use. These sensors can be switched back to a higher power state (i.e., wake up) and capture measurements when needed. In some cases, the autonomy system may adjust the format of output data produced by one or multiple sensors, which can reduce the amount of data being transmitted or processed onboard the vehicle. In addition, the autonomy system can also use duty cycling to turn one or more sensors on and off at specific intervals in order to reduce power consumption.

In some example embodiments, a vehicle performing disclosed techniques may be a Class 8 truck (of a gross vehicle weight rating (GVWR) over 33,000 lbs.), including, for example, tractor trailer trucks, single-unit dump trucks, as well as non-commercial chassis fire trucks. Such vehicles may generally have three or more axles. Other types of vehicles can perform disclosed techniques.

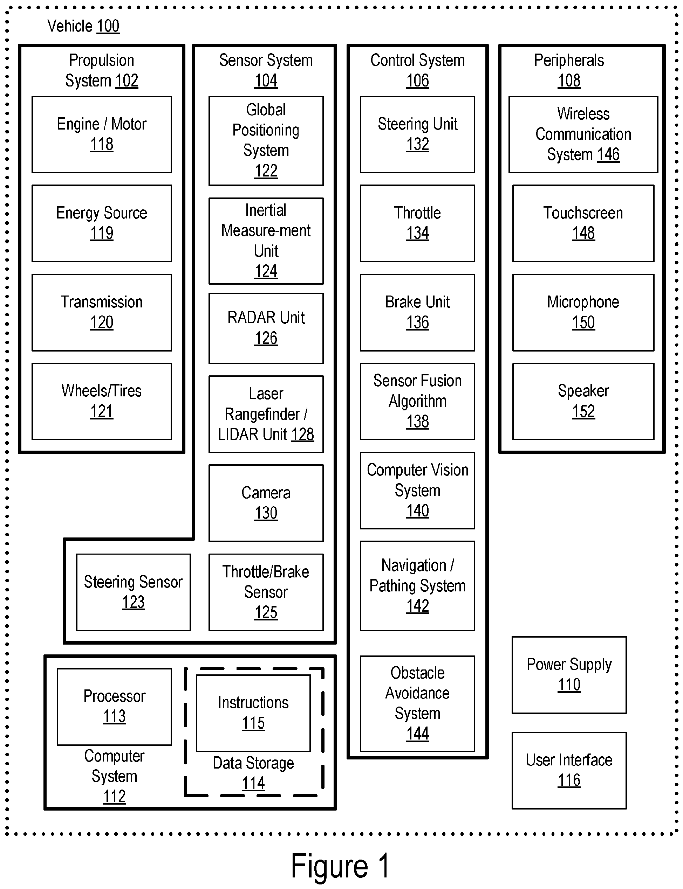

Referring now to the figures, Figure 1 is a functional block diagram illustrating example vehicle 100, which may be configured to operate fully or partially in an autonomous mode. More specifically, vehicle 100 may operate in an autonomous mode without human interaction (or reduced human interaction) through receiving control instructions from a computing system (e.g., a vehicle control system). As part of operating in the autonomous mode, vehicle 100 may use sensors to detect and possibly identify objects of the surrounding environment in order to enable safe navigation. In some implementations, vehicle 100 may also include subsystems that enable a driver (or a remote operator) to control operations of vehicle 100.

As shown in Figure 1, vehicle 100 includes various subsystems, such as propulsion system 102, sensor system 104, control system 106, one or more peripherals 108, power supply 110, computer system 112, data storage 114, and user interface 116. In other examples, vehicle 100 may include more or fewer subsystems. The subsystems and components of vehicle 100 may be interconnected in various ways (e.g., wired or wireless connections). In addition, functions of vehicle 100 described herein can be divided into additional functional or physical components, or combined into fewer functional or physical components within implementations.

Propulsion system 102 may include one or more components operable to provide powered motion for vehicle 100 and can include an engine/motor 118, an energy source 119, a transmission 120, and wheels/tires 121, among other possible components. For example, engine/motor 118 may be configured to convert energy source 119 into mechanical energy and can correspond to one or a combination of an internal combustion engine, an electric motor, steam engine, or Stirling engine, among other possible options. For instance, in some implementations, propulsion system 102 may include multiple types of engines and/or motors, such as a gasoline engine and an electric motor.

Energy source 119 represents a source of energy that may, in full or in part, power one or more systems of vehicle 100 (e.g., engine/motor 118). For instance, energy source 119 can correspond to gasoline, diesel, hydrogen fuel cells, other petroleum-based fuels, propane, other compressed gas-based fuels, ethanol, solar panels, batteries, and/or other sources of electrical power. In some implementations, energy source 119 may include a combination of fuel tanks, batteries, capacitors, and/or flywheels.

Transmission 120 may transmit mechanical power from engine/motor 118 to wheels/tires 121 and/or other possible systems of vehicle 100. As such, transmission 120 may include a gearbox, a clutch, a differential, and a drive shaft, among other possible components. A drive shaft may include axles that connect to one or more wheels/tires 121.

Wheels/tires 121 of vehicle 100 may have various configurations within example implementations. For instance, vehicle 100 may exist in a unicycle, bicycle/motorcycle, tricycle, or car/truck four-wheel format, among other possible configurations. As such, wheels/tires 121 may connect to vehicle 100 in various ways and can exist in different materials, such as metal and rubber.

Sensor system 104 can include various types of sensors, such as Global Positioning System (GPS) 122, inertial measurement unit (IMU) 124, radar unit 126, laser rangefinder / lidar unit 128, camera 130, steering sensor 123, and throttle/brake sensor 125, among other possible sensors. In some implementations, sensor system 104 may also include sensors configured to monitor internal systems of the vehicle 100 (e.g., O₂ monitors, fuel gauge, engine oil temperature, condition of brakes).

GPS 122 may include a transceiver operable to provide information regarding the position of vehicle 100 with respect to the Earth. IMU 124 may have a configuration that uses one or more accelerometers and/or gyroscopes and may sense position and orientation changes of vehicle 100 based on inertial acceleration. For example, IMU 124 may detect a pitch and yaw of the vehicle 100 while vehicle 100 is stationary or in motion.

Radar unit 126 may represent one or more systems configured to use radio signals to sense objects, including the speed and heading of the objects, within the local environment of vehicle 100. As such, radar unit 126 may include antennas configured to transmit and receive radar signals as discussed above. In some implementations, radar unit 126 may correspond to a mountable radar system configured to obtain measurements of the surrounding environment of vehicle 100. For example, radar unit 126 can include one or more radar units configured to couple to the underbody of a vehicle.

Laser rangefinder / lidar 128 may include one or more laser sources, a laser scanner, and one or more detectors, among other system components, and may operate in a coherent mode (e.g., using heterodyne detection) or in an incoherent detection mode. Camera 130 may include one or more devices (e.g., still camera or video camera) configured to capture images of the environment of vehicle 100.

Steering sensor 123 may sense a steering angle of vehicle 100, which may involve measuring an angle of the steering wheel or measuring an electrical signal representative of the angle of the steering wheel. In some implementations, steering sensor 123 may measure an angle of the wheels of the vehicle 100, such as detecting an angle of the wheels with respect to a forward axis of the vehicle 100. Steering sensor 123 may also be configured to measure a combination (or a subset) of the angle of the steering wheel, electrical signal representing the angle of the steering wheel, and the angle of the wheels of vehicle 100.

Throttle/brake sensor 125 may detect the position of either the throttle position or brake position of vehicle 100. For instance, throttle/brake sensor 125 may measure the angle of both the gas pedal (throttle) and brake pedal or may measure an electrical signal that could represent, for instance, an angle of a gas pedal (throttle) and/or an angle of a brake pedal. Throttle/brake sensor 125 may also measure an angle of a throttle body of vehicle 100, which may include part of the physical mechanism that provides modulation of energy source 119 to engine/motor 118 (e.g., a butterfly valve or carburetor). Additionally, throttle/brake sensor 125 may measure a pressure of one or more brake pads on a rotor of vehicle 100 or a combination (or a subset) of the angle of the gas pedal (throttle) and brake pedal, electrical signal representing the angle of the gas pedal (throttle) and brake pedal, the angle of the throttle body, and the pressure that at least one brake pad is applying to a rotor of vehicle 100. In other embodiments, throttle/brake sensor 125 may be configured to measure a pressure applied to a pedal of the vehicle, such as a throttle or brake pedal.

Control system 106 may include components configured to assist in navigating vehicle 100, such as steering unit 132, throttle 134, brake unit 136, sensor fusion algorithm 138, computer vision system 140, navigation / pathing system 142, and obstacle avoidance system 144. More specifically, steering unit 132 may be operable to adjust the heading of vehicle 100, and throttle 134 may control the operating speed of engine/motor 118 to control the acceleration of vehicle 100. Brake unit 136 may decelerate vehicle 100, which may involve using friction to decelerate wheels/tires 121. In some implementations, brake unit 136 may convert kinetic energy of wheels/tires 121 to electric current for subsequent use by a system or systems of vehicle 100.

Sensor fusion algorithm 138 may include a Kalman filter, Bayesian network, or other algorithms that can process data from sensor system 104. In some implementations, sensor fusion algorithm 138 may provide assessments based on incoming sensor data, such as evaluations of individual objects and/or features, evaluations of a particular situation, and/or evaluations of potential impacts within a given situation.

Computer vision system 140 may include hardware and software operable to process and analyze images in an effort to determine objects, environmental objects (e.g., stop lights, road way boundaries, etc.), and obstacles. As such, computer vision system 140 may use object recognition, Structure from Motion (SFM), video tracking, and other algorithms used in computer vision, for instance, to recognize objects, map an environment, track objects, estimate the speed of objects, etc.

Navigation / pathing system 142 may determine a driving path for vehicle 100, which may involve dynamically adjusting navigation during operation. As such, navigation / pathing system 142 may use data from sensor fusion algorithm 138, GPS 122, and maps, among other sources to navigate vehicle 100. Obstacle avoidance system 144 may evaluate potential obstacles based on sensor data and cause systems of vehicle 100 to avoid or otherwise negotiate the potential obstacles.

As shown in Figure 1, vehicle 100 may also include peripherals 108, such as wireless communication system 146, touchscreen 148, microphone 150, and/or speaker 152. Peripherals 108 may provide controls or other elements for a user to interact with user interface 116. For example, touchscreen 148 may provide information to users of vehicle 100. User interface 116 may also accept input from the user via touchscreen 148. Peripherals 108 may also enable vehicle 100 to communicate with devices, such as other vehicle devices.

Wireless communication system 146 may wirelessly communicate with one or more devices directly or via a communication network. For example, wireless communication system 146 could use 3G cellular communication, such as CDMA, EVDO, GSM/GPRS, or 4G cellular communications, such as WiMAX or LTE. Alternatively, wireless communication system 146 may communicate with a wireless local area network (WLAN) using WiFi or other possible connections. Wireless communication system 146 may also communicate directly with a device using an infrared link, Bluetooth, or ZigBee, for example. Other wireless protocols, such as various vehicular communication systems, are possible within the context of the disclosure. For example, wireless communication system 146 may include one or more dedicated short-range communications (DSRC) devices that could include public and/or private data communications between vehicles and/or roadside stations.

Vehicle 100 may include power supply 110 for powering components. Power supply 110 may include a rechargeable lithium-ion or lead-acid battery in some implementations. For instance, power supply 110 may include one or more batteries configured to provide electrical power. Vehicle 100 may also use other types of power supplies. In an example implementation, power supply 110 and energy source 119 may be integrated into a single energy source.

Vehicle 100 may also include computer system 112 to perform operations, such as operations described therein. As such, computer system 112 may include at least one processor 113 (which could include at least one microprocessor) operable to execute instructions 115 stored in a non-transitory computer readable medium, such as data storage 114. In some implementations, computer system 112 may represent a plurality of computing devices that may serve to control individual components or subsystems of vehicle 100 in a distributed fashion.

In some implementations, data storage 114 may contain instructions 115 (e.g., program logic) executable by processor 113 to execute various functions of vehicle 100, including those described above in connection with Figure 1. Data storage 114 may contain additional instructions as well, including instructions to transmit data to, receive data from, interact with, and/or control one or more of propulsion system 102, sensor system 104, control system 106, and peripherals 108.

In addition to instructions 115, data storage 114 may store data such as roadway maps, path information, among other information. Such information may be used by vehicle 100 and computer system 112 during the operation of vehicle 100 in the autonomous, semi-autonomous, and/or manual modes.

Vehicle 100 may include user interface 116 for providing information to or receiving input from a user of vehicle 100. User interface 116 may control or enable control of content and/or the layout of interactive images that could be displayed on touchscreen 148. Further, user interface 116 could include one or more input/output devices within the set of peripherals 108, such as wireless communication system 146, touchscreen 148, microphone 150, and speaker 152.

Computer system 112 may control the function of vehicle 100 based on inputs received from various subsystems (e.g., propulsion system 102, sensor system 104, and control system 106), as well as from user interface 116. For example, computer system 112 may utilize input from sensor system 104 in order to estimate the output produced by propulsion system 102 and control system 106. Depending upon the embodiment, computer system 112 could be operable to monitor many aspects of vehicle 100 and its subsystems. In some embodiments, computer system 112 may disable some or all functions of the vehicle 100 based on signals received from sensor system 104.

The components of vehicle 100 could be configured to work in an interconnected fashion with other components within or outside their respective systems. For instance, in an example embodiment, camera 130 could capture a plurality of images that could represent information about a state of an environment of vehicle 100 operating in an autonomous mode. The state of the environment could include parameters of the road on which the vehicle is operating. For example, computer vision system 140 may be able to recognize the slope (grade) or other features based on the plurality of images of a roadway. Additionally, the combination of GPS 122 and the features recognized by computer vision system 140 may be used with map data stored in data storage 114 to determine specific road parameters. Further, radar unit 126 may also provide information about the surroundings of the vehicle.

In other words, a combination of various sensors (which could be termed input-indication and output-indication sensors) and computer system 112 could interact to provide an indication of an input provided to control a vehicle or an indication of the surroundings of a vehicle.

In some embodiments, computer system 112 may make a determination about various objects based on data that is provided by systems other than the radio system. For example, vehicle 100 may have lasers or other optical sensors configured to sense objects in a field of view of the vehicle. Computer system 112 may use the outputs from the various sensors to determine information about objects in a field of view of the vehicle, and may determine distance and direction information to the various objects. Computer system 112 may also determine whether objects are desirable or undesirable based on the outputs from the various sensors.

Although Figure 1 shows various components of vehicle 100, i.e., wireless communication system 146, computer system 112, data storage 114, and user interface 116, as being integrated into the vehicle 100, one or more of these components could be mounted or associated separately from vehicle 100. For example, data storage 114 could, in part or in full, exist separate from vehicle 100. Thus, vehicle 100 could be provided in the form of device elements that may be located separately or together. The device elements that make up vehicle 100 could be communicatively coupled together in a wired and/or wireless fashion.

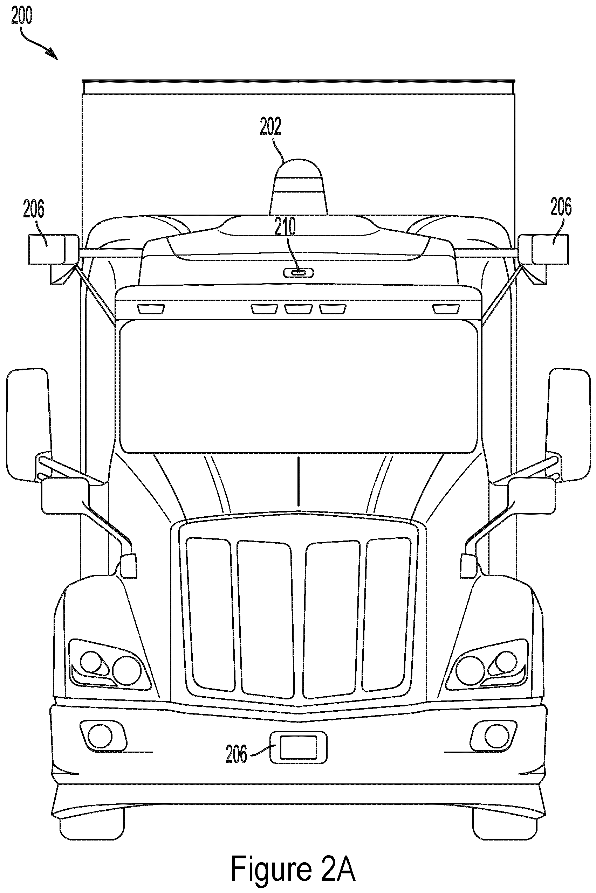

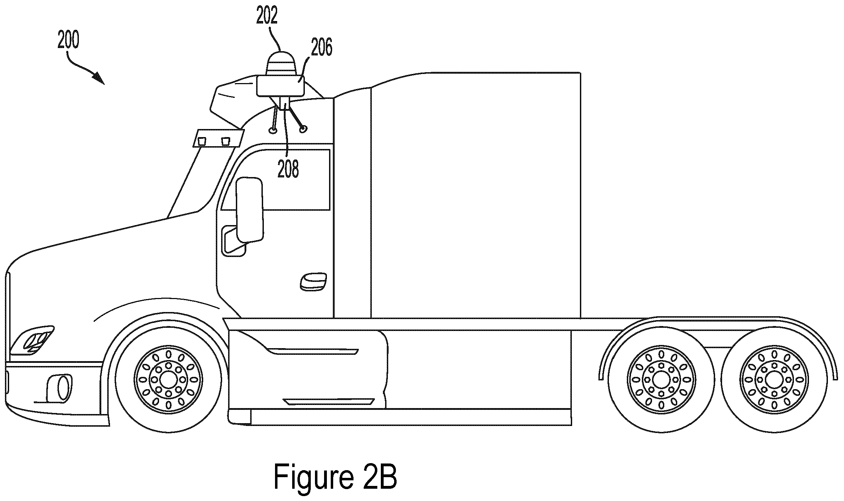

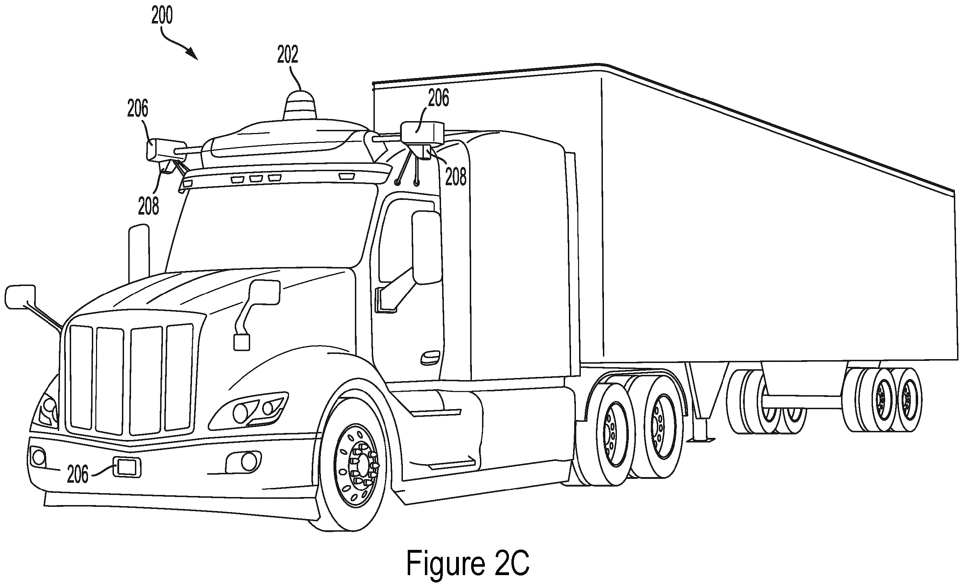

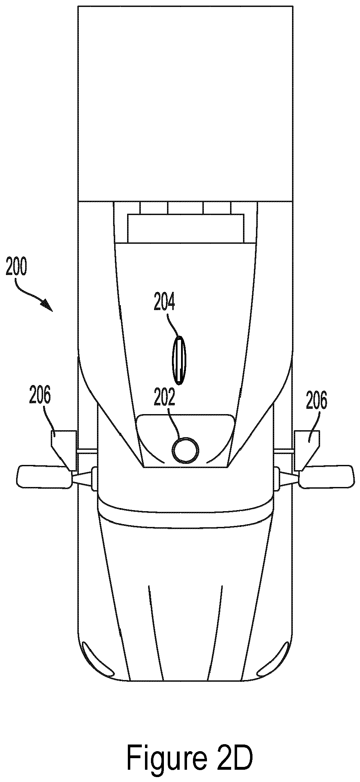

Figure 2A illustrates a front view of vehicle 200, Figure 2B illustrates a side view of vehicle 200, Figure 2C illustrates a perspective view of vehicle 200, and Figure 2D illustrates a top view of vehicle 200. As such, Figures 2A-2D together illustrate an example physical configuration of vehicle 200, which may represent one possible physical configuration of vehicle 100 described in reference to Figure 1. Depending on the embodiment, vehicle 200 may include sensor unit 202, wireless communication system 204, radar unit 206, lidar units 208, and camera 210, among other possible components. For instance, vehicle 200 may include some or all of the elements of components described in Figure 1. Although vehicle 200 is depicted in Figure 2 as a semi-truck, vehicle 200 can have other configurations within examples, such as a car, a van, a motorcycle, a bus, a shuttle, a golf cart, an off-road vehicle, robotic device, a farm vehicle, or other vehicles pulling a trailer among other possible examples.

Sensor unit 202 may include one or more sensors configured to capture information of the surrounding environment of vehicle 200. For example, sensor unit 202 may include any combination of cameras, radars, lidars, range finders, radio devices (e.g., Bluetooth and/or 802.11), and acoustic sensors, among other possible types of sensors. In some implementations, sensor unit 202 may include one or more movable mounts operable to adjust the orientation of sensors in sensor unit 202. For example, the movable mount may include a rotating platform that can scan sensors so as to obtain information from each direction around vehicle 200. The movable mount of sensor unit 202 may also be movable in a scanning fashion within a particular range of angles and/or azimuths.

In some implementations, sensor unit 202 may include mechanical structures that enable sensor unit 202 to be mounted atop the roof of a truck. Additionally, other mounting locations are possible within examples.

Wireless communication system 204 may have a location relative to vehicle 200 as depicted in Figure 2D, but can also have different locations. Wireless communication system 204 may include one or more wireless transmitters and one or more receivers that may communicate with other external or internal devices. For example, wireless communication system 204 may include one or more transceivers for communicating with a user's device, other vehicles, and roadway elements (e.g., signs, traffic signals), among other possible entities. As such, vehicle 200 may include one or more vehicular communication systems for facilitating communications, such as dedicated short-range communications (DSRC), radio frequency identification (RFID), and other proposed communication standards directed towards intelligent transport systems. Wireless communication system 204 may include a cellular or wireless data connection and can be used to communicate with one or multiple remote computing systems. The remote computing system may be configured to provide instructions and/or data to vehicle 200 to aid in its autonomous operation.

Vehicle 200 may include several radar units 206 at various locations. In one example, vehicle 200 may include a radar unit located on each of the front and back bumpers of the cab portion. Additionally, vehicle 200 may include two radar units located on each side of vehicle 200 near the side-view mirrors. The two radar units on the sides of the vehicle may be positioned so that one images a forward right section, one images a forward left section, one images a rear right section, and one images a rear left section. Each radar unit may be configured to transmit and receive radar signals over an angular region defined by a beam width of the radar unit. In some examples, each radar unit may be able to perform beam steering on transmit or receive beams. By using beam steering, a radar unit may be able to interrogate a predefined angular direction.

Vehicle 200 may also include lidar units 208 mounted in various locations. For example, lidar units 208 may also be mounted on the sides of vehicle 200 near the rear-view mirrors. Lidar units 208 may be configured to transmit and receive light signals from the region around the vehicle. Lidar units 208 may be able to image the region around vehicle 200 from which light reflections are received.

Camera 210 may have various positions relative to vehicle 200, such as a location above a front windshield of vehicle 200. As such, camera 210 may capture images of the environment. For instance, camera 210 may capture images from a forward-looking view with respect to vehicle 200, but other mounting locations (including movable mounts) and viewing angles of camera 210 are possible within implementations. In some examples, camera 210 may correspond to one or more visible light cameras, but can also be other types of cameras (e.g., infrared sensor). Camera 210 may also include optics that may provide an adjustable field of view.

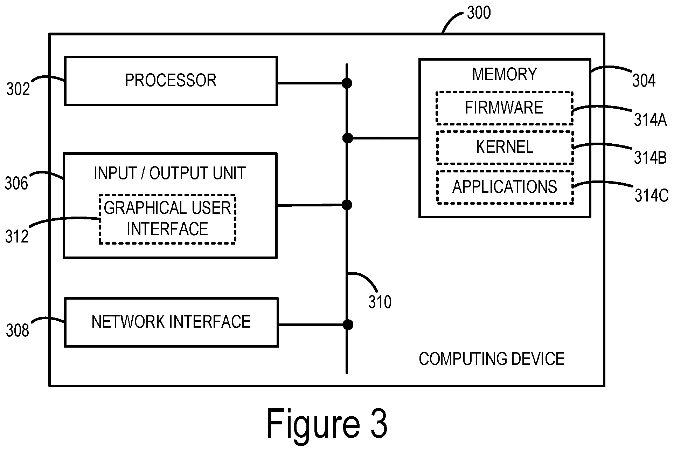

Figure 3 is a simplified block diagram exemplifying computing device 300, illustrating some of the components that could be included in a computing device arranged to operate in accordance with the embodiments herein. Computing device 300 could be a client device (e.g., a device actively operated by a user (e.g., a remote operator)), a server device (e.g., a device that provides computational services to client devices), or some other type of computational platform. In some embodiments, computing device 300 may be implemented as computer system 112, which can be located on vehicle 100 and perform processing operations related to vehicle operations. For example, computing device 300 can be used to process sensor data received from sensor system 104. Alternatively, computing device 300 can be located remotely from vehicle 100 and communicate via secure wireless communication. For example, computing device 300 may operate as a remotely positioned device that a remote human operator can use to communicate with one or more vehicles.

In the example embodiment shown in Figure 3, computing device 300 includes processing system 302, memory 304, input / output unit 306 and network interface 308, all of which may be coupled by a system bus 310 or a similar mechanism. In some embodiments, computing device 300 may include other components and/or peripheral devices (e.g., detachable storage, sensors, and so on).

Processing system 302 may be one or more of any type of computer processing element, such as a central processing unit (CPU), a co-processor (e.g., a mathematics, graphics, or encryption co-processor), a digital signal processor (DSP), a network processor, and/or a form of integrated circuit or controller that performs processor operations. In some cases, processing system 302 may be one or more single-core processors. In other cases, processing system 302 may be one or more multi-core processors with multiple independent processing units. Processing system 302 may also include register memory for temporarily storing instructions being executed and related data, as well as cache memory for temporarily storing recently-used instructions and data.

Memory 304 may be any form of computer-usable memory, including but not limited to random access memory (RAM), read-only memory (ROM), and non-volatile memory. This may include flash memory, hard disk drives, solid state drives, rewritable compact discs (CDs), rewritable digital video discs (DVDs), and/or tape storage, as just a few examples.

Computing device 300 may include fixed memory as well as one or more removable memory units, the latter including but not limited to various types of secure digital (SD) cards. Thus, memory 304 can represent both main memory units, as well as long-term storage. Other types of memory may include biological memory.

Memory 304 may store program instructions and/or data on which program instructions may operate. By way of example, memory 304 may store these program instructions on a non-transitory, computer-readable medium, such that the instructions are executable by processing system 302 to carry out any of the methods, processes, or operations disclosed in this specification or the accompanying drawings.

As shown in Figure 3, memory 304 may include firmware 314A, kernel 314B, and/or applications 314C. Firmware 314A may be program code used to boot or otherwise initiate some or all of computing device 300. Kernel 314B may be an operating system, including modules for memory management, scheduling and management of processes, input / output, and communication. Kernel 314B may also include device drivers that allow the operating system to communicate with the hardware modules (e.g., memory units, networking interfaces, ports, and busses), of computing device 300. Applications 314C may be one or more user-space software programs, such as web browsers or email clients, as well as any software libraries used by these programs. In some examples, applications 314C may include one or more neural network applications and other deep learning-based applications. Memory 304 may also store data used by these and other programs and applications.

Input / output unit 306 may facilitate user and peripheral device interaction with computing device 300 and/or other computing systems. Input / output unit 306 may include one or more types of input devices, such as a keyboard, a mouse, one or more touch screens, sensors, biometric sensors, and so on. Similarly, input / output unit 306 may include one or more types of output devices, such as a screen, monitor, printer, speakers, and/or one or more light emitting diodes (LEDs). Additionally or alternatively, computing device 300 may communicate with other devices using a universal serial bus (USB) or high-definition multimedia interface (HDMI) port interface, for example. In some examples, input / output unit 306 can be configured to receive data from other devices. For instance, input / output unit 306 may receive sensor data from vehicle sensors.

As shown in Figure 3, input / output unit 306 includes GUI 312, which can be configured to provide information to a remote operator or another user. GUI 312 may involve one or more display interfaces, or another type of mechanism for conveying information and receiving inputs. In some examples, the representation of GUI 312 may differ depending on a vehicle situation. For example, computing device 300 may provide GUI 312 in a particular format, such as a format with a single selectable option for a remote operator to select from.

Network interface 308 may take the form of one or more wireline interfaces, such as Ethernet (e.g., Fast Ethernet, Gigabit Ethernet, and so on). Network interface 308 may also support communication over one or more non-Ethernet media, such as coaxial cables or power lines, or over wide-area media, such as Synchronous Optical Networking (SONET) or digital subscriber line (DSL) technologies. Network interface 308 may additionally take the form of one or more wireless interfaces, such as IEEE 802.11 (Wi-Fi), BLUETOOTH^{®}, global positioning system (GPS), or a wide-area wireless interface. However, other forms of physical layer interfaces and other types of standard or proprietary communication protocols may be used over network interface 308. Furthermore, network interface 308 may comprise multiple physical interfaces. For instance, some embodiments of computing device 300 may include Ethernet, BLUETOOTH^{®}, and Wi-Fi interfaces. In some embodiments, network interface 308 may enable computing device 300 to connect with one or more vehicles to allow for remote assistance techniques presented herein.

In some embodiments, one or more instances of computing device 300 may be deployed to support a clustered architecture. The exact physical location, connectivity, and configuration of these computing devices may be unknown and/or unimportant to client devices. Accordingly, the computing devices may be referred to as "cloud-based" devices that may be housed at various remote data center locations. In addition, computing device 300 may enable the performance of embodiments described herein, including efficient assignment and processing of sensor data. For example, in some cases, computing device 300 may be located remote and provide instructions for adjusting parameters of autonomy systems onboard vehicles within a fleet based on vehicle location and weather conditions.

Computing device 300 may perform automatic introspection techniques described herein. In some cases, computing device 300 may operate as part of a vehicle's perception system and evaluate performance as the perception system detects objects in the surrounding environment. As such, in some embodiments, computing device 300 may be onboard a vehicle. In other embodiments, computing device 300 may be positioned remotely from the vehicle. In such cases, computing device 300 may be an individual computing device or it may be a fleet manager device evaluating performance for multiple vehicles within a fleet.

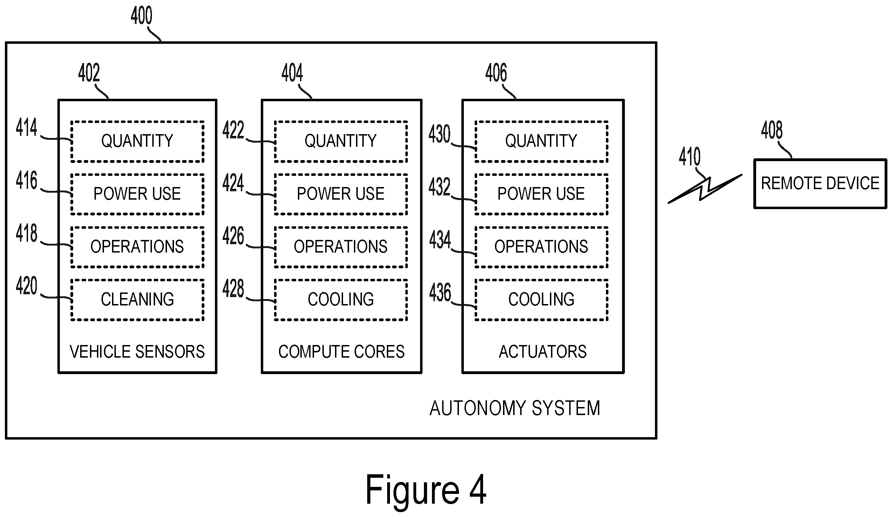

Figure 4 is a functional block diagram illustrating autonomy system 400 that can modify power consumption of components in-real time based on environment conditions. As shown in the example embodiment, autonomy system 400 represents an arrangement of components that can enable autonomous operations (e.g., autonomous navigation) and includes vehicle sensors 402, compute cores 404, and actuators 406. In addition, autonomy system 400 is also shown engaging with remote device 408 via wireless communication 410. In other examples, autonomy system 400 can include more or fewer components in other arrangements. In some instances, components of autonomy system 400 can be distributed at different locations within examples, such as at different parts of a vehicle.

Autonomy system 400 can be used by a vehicle or another type of platform to process and perform disclosed operations to enable efficient use of onboard energy (e.g., fuel, battery). In general, autonomy system 400 uses sensor data from vehicle sensors 402, processing by compute cores 404, movements of actuators 406 to enable autonomous (or semi-autonomous) operations, such as autonomous navigation by a vehicle. By adjusting power consumption of components of autonomy system 400 in real-time, overall energy stored onboard the vehicle can be used more efficiently, thereby enabling the vehicle to have more energy available to increase travel range and/or for other uses (e.g., cooling or heating the interior of the vehicle). As such, disclosed examples can be performed by autonomy systems on different types of vehicles, including internal combustion engine vehicles, electric vehicles, and hybrid vehicles.

Autonomy system 400 may use different types of sensor data to understand and navigate its environment. As shown in Figure 4, vehicle sensors 402 includes one or multiple types of sensors that can capture measurements of the surrounding environment or other types of sensor data that can be used by autonomy system 400. For instance, some vehicle sensors 402 may measure vehicle components while others capture measurements of the external environment surrounding the vehicle. In some embodiments, vehicle sensors 402 includes one or more lidar, radar, and cameras.

In some embodiments, autonomy system 400 may create and maintain a map of a vehicle's surroundings based on sensor data from vehicle sensors 402 positioned on different parts of the vehicle. For instance, radar can be used to monitor position of nearby vehicles while video cameras are used to detect traffic lights, read road signs, track other vehicles, and detect pedestrians. Lidar can be used to measure distances, detect road edges, and identify lane markings while ultrasonic sensors can help detect curbs and other vehicles in close proximity. These are a few illustrative examples and the types of vehicle sensors 402 used and the ways they are used can vary in example embodiments

Sensor data obtained via vehicle sensors 402 can be used and processed by compute cores 404, which can correspond to one or multiple computing systems located onboard the vehicle. In particular, compute cores 404 are processing units that can each read and execute program instructions. For instance, compute cores 404 can execute software, machine learning techniques, and other instructions to enable a vehicle to navigate in accordance with road boundaries and other objects (e.g., vehicles, pedestrians) in the environment. Compute cores 404 can include one or multiple processors that can execute instructions, including performing operations disclosed herein and the types, quantity, and arrangement of compute cores 404 can vary within examples.

Compute cores 404 can use sensor data provided by vehicle sensors 402 when determining instructions for controlling aspects of the vehicle, such as actuators 406. Compute cores 404 may process sensory input, plot a path, and send instructions to actuators 406, which control acceleration, braking, and steering. Obstacle avoidance algorithms, predictive modeling, hard-coded rules, and object recognition can be used by autonomy system 400 to enable the vehicle to follow traffic rules and navigate obstacles.

Actuators 406 are the components in a vehicle that translate the electronic signals generated by autonomy system 400 or another system of the vehicle (e.g., the navigation system) into physical movements. In general, actuators 406 are controlled by one or multiple control devices and a source of energy. For instance, actuators 406 can include pneumatic actuators, hydraulic actuators, electromagnetic actuators, and/or gear motors or electric actuators. As such, actuators 406 used in autonomous vehicles to navigate their environment can include steering actuators, throttle actuators, brake actuators, suspension actuators, gear actuators, and/or drive-by-wire actuators. Steering actuators control the steering angle of the front wheels and are responsible for steering the vehicle in the desired direction while throttle actuators control the engine's throttle and are responsible for accelerating or decelerating the vehicle. Brake actuators control the brakes and are responsible for slowing down or stopping the vehicle. Suspension actuators control the suspension system and are responsible for adjusting the height of the vehicle to optimize its stability and handling and gear actuators control the transmission and are responsible for shifting gears and changing the vehicle's speed. In some cases, suspension actuators may adjust the drag of a vehicle (e.g., a truck) by adjusting the height of the vehicle at different points (e.g., lower the truck height in the front). Drive-by-wire actuators are responsible for transmitting signals from the navigation system to various components of the vehicle, such as the throttle, brakes, and steering, without the need for mechanical linkages. As such, actuators 406 work in coordination to enable the vehicle to move in the desired direction, avoid obstacles, and follow the planned path to its destination. In some embodiments, actuators 406 may include other types of actuators.

In some instances, autonomy system 400 may further communicate with remote device 408, which can represent one or multiple types of devices that can engage in wireless communication 410 with one or more components of autonomy system 400. For instance, remote device 408 can represent a computing system, such as a personal computing device or a server. In some examples, remote device 408 is a network of computing devices that may include computing devices located onboard vehicles and/or other types of platforms. As such, remote device 408 can communicate information for use by autonomy system 400. Information can include maps, route-related data, traffic information, and weather information. In some embodiments, remote device 408 can perform operations disclosed herein and provide instructions to autonomy system 400. In addition, remote device 408 can represent an external vehicle in some examples.

Wireless communication 410 allows components of autonomy system 400 to communicate with exterior devices, including remote device 408. As such, various types of wireless communication can be used. In some embodiments, autonomy system 400 may communicate with onboard systems that can enable wireless communication 410 with remote device 408 in some examples.

Autonomy system 400 may perform disclosed operations to modify power consumption of components within autonomy system 400 that enable autonomous navigation. In practice, autonomy system 400 implements adjustments to the operations of one or multiple components in real-time to decrease power consumption by autonomy system 400 overall, such as when the vehicle's environment allows autonomy system 400 to operate at a lower power consumption level while still enabling safe navigation.

Modifying power consumption by autonomy system 400 can involve switching states of one or more components (e.g., from powered on to powered off or from a high power state to a low power state), adjusting frequency of use, or particular operation parameters, among other changes. For instance, autonomy system 400 can adjust a quantity 414, a power use 416, operations 418, and cleaning 420 for vehicle sensors 402. Similarly, autonomy system 400 can also adjust a quantity 422, a power use 424, operations 426, and cooling 428 of compute cores 404 and a quantity 430, a power use 432, operations 434, and cooling 436 of actuators 406. When making adjustments, autonomy system 400 can modify multiple aspects simultaneously. For instance, autonomy system 400 can adjust power use 416 of some vehicle sensors while also decreasing the overall quantity of the vehicle sensors being used. Autonomy system 400 can also adjust compute cores 404 and actuators 406 in addition or in replacement of adjustments to vehicle sensors 402.

In some embodiments, autonomy system 400 adjusts a quantity 414 of vehicle sensors 402 operating, which can include increasing or reducing the overall number of vehicle sensors 402 capturing measurements in response to predicted conditions. The quantity 414 of vehicle sensors 402 may be increased in response to certain environment conditions, such as increased traffic conditions or when weather reduces visibility (e.g., fog). Autonomy system 400 can also adjust the power use 416 of vehicle sensors 402, which may involve adjusting a range, a frequency, a state, or other aspects of performance at one or multiple vehicle sensors 402. For instance, the range and frequency of one or multiple lidars and/or radars used by autonomy system 400 can be increased or decreased as determined suitable for safe navigation.

In some embodiments, autonomy system 400 adjusts one or more of a quantity 422, a power use 424, operations 426, and/or cooling 428 for compute cores 404. For instance, autonomy system 400 can increase or decrease the quantity of compute cores 404, adjust the power consumption by one or more compute cores 404, and/or adjust the operations being performed by compute cores 404. Cooling 428 can be adjusted by increasing or decreasing the cooling applied by a cooling system to one or multiple compute cores 404.

In some embodiments, autonomy system 400 adjusts a quantity 430, a power use 432, operations 434, and cooling 436 of actuators 406. The quantity of actuators 406 performing operations can be adjusted. In addition, power use 432 by one or multiple actuators 406 can be increased or decreased. Similarly, operations 434 and cooling 436 for actuators 406 can also be modified.

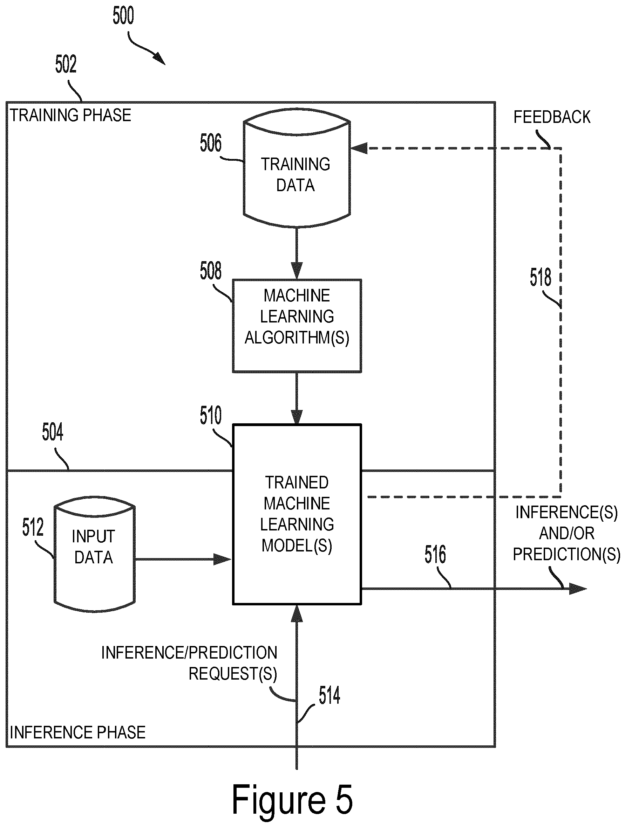

Figure 5 shows diagram 500 illustrating training phase 502 and inference phase 504 of trained machine learning model(s) 510. Disclosed techniques can be used to train one or multiple machine learning model(s) 510 that can be used to modify power consumption by one or multiple components of an autonomy system. Machine learning model(s) 510 can factor internal vehicle parameters and external environment parameters when determining modifications for power consumption by the autonomy system. As such, different navigation scenarios can be used to train one or multiple machine learning model(s) 510 to output when to adjust vehicle sensors, compute, and/or actuators during subsequent navigation.

Some machine learning techniques involve training one or more machine learning algorithms on an input set of training data to recognize patterns in the training data and provide output inferences and/or predictions about (patterns in the) training data. The resulting trained machine learning algorithm can be termed as a trained machine learning model, which may be used for evaluation of a perception system's performance. In the example embodiment, Figure 5 shows training phase 502 that involves one or more machine learning algorithms 508 being trained on training data 506 to generate trained machine learning model(s) 510. Then, during inference phase 504, trained machine learning model(s) 510 can receive input data 512 and one or more inference/prediction requests 514 (perhaps as part of input data 512) and responsively provide as an output one or more inferences and/or predictions 516.

Trained machine learning model(s) 510 can include one or more models of one or more machine learning algorithms 508. Machine learning algorithm(s) 508 may include, but are not limited to: an artificial neural network (e.g., a convolutional neural network, a recurrent neural network), a Bayesian network, a hidden Markov model, a Markov decision process, a logistic regression function, a support vector machine, a suitable statistical machine learning algorithm, and/or a heuristic machine learning system. In addition, machine learning algorithm(s) 508 may be supervised or unsupervised, and may implement any suitable combination of online and offline learning.

In some examples, machine learning algorithm(s) 508 and/or trained machine learning model(s) 510 can be accelerated using on-device coprocessors, such as graphic processing units (GPUs), tensor processing units (TPUs), digital signal processors (DSPs), and/or application specific integrated circuits (ASICs). Such on-device coprocessors can be used to speed up machine learning algorithm(s) 508 and/or trained machine learning model(s) 510. In some examples, trained machine learning model(s) 510 can be trained, reside on and executed to provide inferences on a particular computing device, and/or otherwise can make inferences for the particular computing device.

During training phase 502, machine learning algorithm(s) 508 can be trained by providing at least training data 506 (e.g., labeled sensor data) as training input using unsupervised, semi-supervised, supervised, and/or reinforcement learning techniques. Unsupervised learning can involve providing a portion (or all) of training data 506 to machine learning algorithm(s) 508 and machine learning algorithm(s) 508 determining one or more output inferences based on the provided portion (or all) of training data 506. In some embodiments, training of the machine learning model may involve unsupervised learning based on a loss function that measures one or multiple detection parameters. Semi-supervised learning involves having correct results for part, but not all, of training data 506. During semi-supervised learning, supervised learning is used for a portion of training data 506 having correct results, and unsupervised learning is used for a portion of training data 506 not having correct results.

Supervised learning involves providing a portion of training data 506 to machine learning algorithm(s) 508, with machine learning algorithm(s) 508 determining one or more output inferences based on the provided portion of training data 506, and the output inference(s) are either accepted or corrected based on correct results associated with training data 506. In some examples, supervised learning of machine learning algorithm(s) 508 can be governed by a set of rules and/or a set of labels for the training input, and the set of rules and/or set of labels may be used to correct inferences of machine learning algorithm(s) 508.

In some instances, models developed through learning can be used to determine power consumption strategies for an autonomy system. For example, logged data from executed manual driving strategies, autonomous driving strategies, or both, on highway navigation and other roadways may be utilized for supervised training of machine learning algorithm(s) 508. Data labelers may observe the scene, nearby traffic, and a pose of the autonomous vehicle. Data labelers may then label the situations to help classify and interpret objects in the environment. The labeled scenes can then be used as training data 506 to train machine learning algorithm(s) 508 that would help the autonomy system adjust components in novel driving scenarios. Supervised learning methods may be similarly applied to simulated data to significantly augment the training data 506. Artificial freeway slow lead agent scenarios may be generated with various geometries, random traffic placements, random agent velocities, and random agent accelerations. The labeled artificial scenes can be used as training data 506 to train machine learning algorithm(s) 508.

Reinforcement learning involves machine learning algorithm(s) 508 receiving a reward signal regarding a prior inference, where the reward signal can be a numerical value. During reinforcement learning, machine learning algorithm(s) 508 can output an inference and receive a reward signal in response, where machine learning algorithm(s) 508 are configured to try to maximize the numerical value of the reward signal. In some examples, reinforcement learning also utilizes a value function that provides a numerical value representing an expected total of the numerical values provided by the reward signal over time. For example, when a discrete decision is to be selected from two or more options or plans, such as, for example, continue to drive in a first lane or change lanes to a second lane, a policy may be constructed that scores each planned trajectory against a rubric of features.

For example, scored features of a trajectory may include (but may not be limited to) a progress made with each trajectory, a difficulty of performing a lane change operation, an amount of acceleration needed by either the autonomous truck or other agents and/or vehicles in the scene, a kinematic comfort of each trajectory, or a minimum predicted buffer provided to other agents and/or vehicles at the scene. The total score for each possible trajectory may be a weighted sum of each scored feature, and the autonomous truck may follow a plan with a lowest score. The respective feature weights may be selected by a variety of automatic and/or heuristic methods. For example, feature weights may be learned from human driving behavior in situations with slow lead agents. Also, for example, for a set of trajectories driven by a human driver in such scenarios, a technique such as inverse reinforcement learning may be applied to compute the set of feature weights. Such an approach helps mimic a logic applied by a human driver.

In some examples, machine learning algorithm(s) 508 and/or trained machine learning model(s) 510 can be trained using other machine learning techniques, including but not limited to, incremental learning and curriculum learning. In some examples, machine learning algorithm(s) 508 and/or trained machine learning model(s) 510 can use transfer learning techniques. For example, transfer learning techniques can involve trained machine learning model(s) 510 being pre-trained on one set of data and additionally trained using training data 506. More particularly, machine learning algorithm(s) 508 can be pre-trained on data from one or more computing devices and a resulting trained machine learning model provided to a particular computing device, where the particular computing device is intended to execute the trained machine learning model during inference phase 504. Then, during training phase 502, the pre-trained machine learning model can be additionally trained using training data 506, where training data 506 can be derived from kernel and non-kernel data of the particular computing device. For instance, kernel data can exist as core components of the operating system of the computing device. This further training of the machine learning algorithm(s) 508 and/or the pre-trained machine learning model using training data 506 of the particular computing device's data can be performed using either supervised or unsupervised learning. Once machine learning algorithm(s) 508 and/or the pre-trained machine learning model has been trained on at least training data 506, training phase 502 can be completed. The trained resulting machine learning model can be utilized as at least one of trained machine learning model(s) 510.

In particular, once training phase 502 has been completed, trained machine learning model(s) 510 can be provided to a computing device, if not already on the computing device. Inference phase 504 can begin after trained machine learning model(s) 510 are provided to the particular computing device.

During inference phase 504, trained machine learning model(s) 510 can receive input data 512 and generate and output one or more corresponding inferences and/or predictions 516 about input data 512. As such, input data 512 can be used as an input to trained machine learning model(s) 510 for providing corresponding inference(s) and/or prediction(s) 516 to kernel components and non-kernel components. For example, trained machine learning model(s) 510 can generate inference(s) and/or prediction(s) 516 in response to one or more inference/prediction requests 516. In some examples, trained machine learning model(s) 510 can be executed by a portion of other software. For example, trained machine learning model(s) 510 can be executed by an inference or prediction daemon to be readily available to provide inferences and/or predictions upon request. Input data 512 can include data from the particular computing device executing trained machine learning model(s) 510 and/or input data from one or more computing devices other than the particular computing device.

Input data 512 can include one or more of real-world driving scenarios, simulated driving scenarios, or both. Various driving scenarios may be generated with various geometries, random traffic placements, random agent velocities, and/or random agent accelerations. Other types of input data are possible as well. Input data 512 can be labeled images that indicate a preference for a lane change or not, or that select a driving strategy from one or more available strategies. Inference(s) and/or prediction(s) 516 can include output navigation plans, output driving strategies, and/or other output data produced by trained machine learning model(s) 510 operating on input data 512 (and training data 506). In some embodiments, output inference(s) and/or prediction(s) 516 may include predicted navigation plans of other vehicles (such as a vehicle that has a high probability of an interaction with the autonomous truck, a merging vehicle, and so forth). In some examples, trained machine learning model(s) 510 can use output inference(s) and/or prediction(s) 516 as input feedback 518. Trained machine learning model(s) 510 can also rely on past inferences as inputs for generating new inferences.

Deep neural nets for modifying power consumption by an autonomy system can be examples of machine learning algorithm(s) 508. After training, the trained version of deep neural nets can be examples of trained machine learning model(s) 510. In this approach, an example of inference / prediction request(s) 516 can be a request to predict a driving strategy for an input scenario involving various nearby agents (e.g., other vehicles, pedestrians) and corresponding example of inferences and/or prediction(s) 516 can be an output driving strategy.

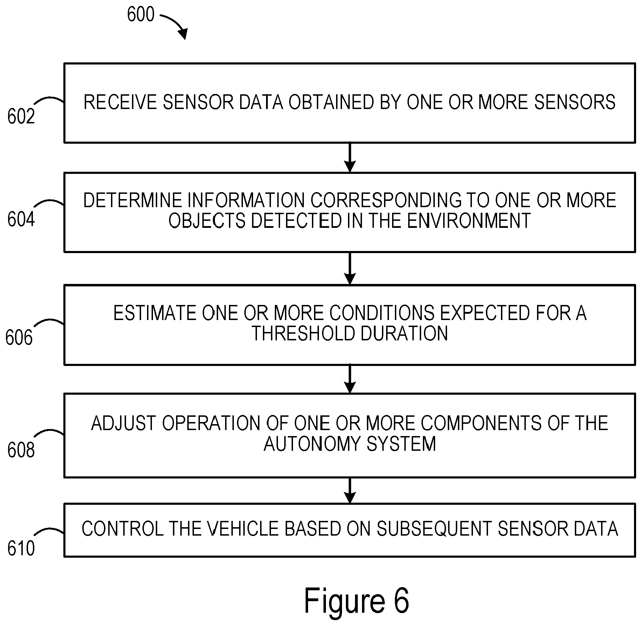

Figure 6 is a method for automatic introspection. Method 600 represents an example method that may include one or more operations, functions, or actions, as depicted by one or more of blocks 602, 604, 606, 608, and 610, each of which may be carried out by any of the systems, devices, and/or vehicles shown in Figures 1-5, among other possible systems. For instance, computing device 300 depicted in Figure 3 or one or more compute cores 404 shown in Figure 4 may perform method 600.

Those skilled in the art will understand that the flowchart described herein illustrates functionality and operations of certain implementations of the present disclosure. In this regard, each block of the flowchart may represent a module, a segment, or a portion of program code, which includes one or more instructions executable by one or more processors for implementing specific logical functions or steps in the process. The program code may be stored on any type of computer readable medium, for example, such as a storage device including a disk or hard drive.

In addition, each block may represent circuitry that is wired to perform the specific logical functions in the process. Alternative implementations are included within the scope of the example implementations of the present application in which functions may be executed out of order from that shown or discussed, including substantially concurrent or in reverse order, depending on the functionality involved, as may be understood by those reasonably skilled in the art.

At block 602, method 600 involves receiving, by an autonomy system coupled to a vehicle, sensor data obtained by one or more sensors as the vehicle navigates a path in an environment. The autonomy system includes one or more compute cores and one or multiple sensors. In addition, the autonomy system can include multiple actuators.

In some examples, the autonomy system can receive sensor data from one or more cameras, lidar, radar, GPS, IMU, and/or ultrasonic sensors, among others. The autonomy system may also obtain map data from memory or from a remote computing device. In addition, the quantity of compute cores and actuators can differ within examples.

At block 604, method 600 involves determining, by the autonomy system and based on the sensor data, information corresponding to one or more objects detected in the environment. The autonomy system may detect objects in the surrounding environment, such as other vehicles, pedestrians, traffic markings, signals, signs, and road boundaries, etc. The information can also convey detection parameters, such as position and orientation of objects relative to the vehicle. In some cases, the information may also indicate road grade, type of road surface, and weather conditions.

At block 606, method 600 involves estimating, based on the information corresponding to the one or more objects, one or more conditions expected for a threshold duration during subsequent navigation of the path. The conditions can indicate traffic level surrounding the vehicle, road conditions (e.g., icy or wet), visibility of the environment, weather conditions and other information. In some examples, the autonomy system adjusts the threshold duration based on a speed of the vehicle. As such, the threshold duration used for urban driving can differ from the threshold duration used for freeway driving.

At block 608, method 600 involves adjusting, by the autonomy system, operation of one or more components of the autonomy system based on the one or more conditions expected for the threshold duration and respective power consumption data corresponding to the one or more components. For instance, the autonomy system can adjust power consumption at one or multiple sensors, one or multiple compute cores, and/or one or multiple actuators. Adjusting power consumption can involve decreasing power consumption by the autonomy system in some cases when the environment permits and/or remaining energy available onboard may require. In other cases, power consumption by the autonomy system may be increased when the environment conditions require and/or the onboard energy level allows. In some instances, the autonomy system may decrease power consumption by some components while increasing power consumption of other components of the autonomy system.

In some examples, the autonomy system estimates a transition from a low confidence environment to a high confidence environment. The autonomy system may then transition one or more lidars (or other types of sensors) from a high power consumption state to a low power consumption state.

In some examples, the autonomy system adjusts a frequency of a compute cooling system that is configured to reduce an operational temperature of the compute cores. In some examples, the autonomy system adjusts a frequency of a sensor cleaning system. The sensor cleaning system is configured to clean one or more sensors. For instance, the autonomy system may increase sensor cleaning frequency during rainy or other conditions that require more frequent cleaning of some sensors. As an example, the autonomy system may increase cleaning of cameras and/or other sensors when the vehicle is traveling at high speeds causing more debris and insects to impact sensor visibility.

In some examples, the vehicle is an electric vehicle (or hybrid vehicle). The autonomy system may determine a battery level corresponding to the vehicle and adjust operation of the one or more components of the autonomy system further based on the battery level corresponding to the vehicle and a total distance to a predefined destination associated with the path for the vehicle. In other examples, the autonomy system determines a fuel level corresponding to the vehicle. For instance, the autonomy system may receive a fuel level measurement from a fuel sensor. The autonomy system can adjust operation of the one or more components of the autonomy system further based on the fuel level corresponding to the vehicle and a total distance to a predefined destination associated with the path for the vehicle.

At block 610, method 600 involves controlling the vehicle based on subsequent sensor data obtained after adjusting operation of the one or more components of the autonomy system. The vehicle may continue to navigate using signals from the autonomy system in real-time and can further adjust control strategy as the autonomy system adjusts power consumption based on changing environment conditions. The computing system may adjust power consumption for a threshold duration, which can be based on a continuous adjustment cycle that the autonomy system uses to cyclically check if power consumption at the autonomy system should be altered.

In some examples, the autonomy system receives sensor data from a set of sensors from the plurality of sensors and estimates a decrease in traffic along at least one side of the vehicle for the threshold duration. The autonomy system may then reduce power consumption by the set of sensors and corresponding compute cores that process sensor data obtained by the set of sensors based on the estimated decrease in traffic. For instance, the autonomy system may use less sensors to obtain sensor measurements on the sides of the vehicles until detecting an increase in traffic.

In some examples, the autonomy system estimates a decrease in visibility in the environment expected for the threshold duration and then provides instructions that increase power consumption by one or more given sensors and corresponding compute cores that process sensor data obtained by the given one or more sensors. For instance, the autonomy system can switch one or more radar units from a low power state to a high power state in response to the decreased visibility.

In some examples, the autonomy system receives point cloud data from a lidar coupled to the vehicle and then adjusts at least a frequency or a range of the lidar for at least the threshold duration. For instance, the autonomy system may reduce both the frequency and the range of the lidar for at least the threshold duration. The autonomy system can perform similar techniques for radar and cameras.

In some examples, the autonomy system determines an energy level remaining in the battery of the vehicle and then adjusts power consumption at one or more components of the autonomy system based on the energy remaining in the battery.

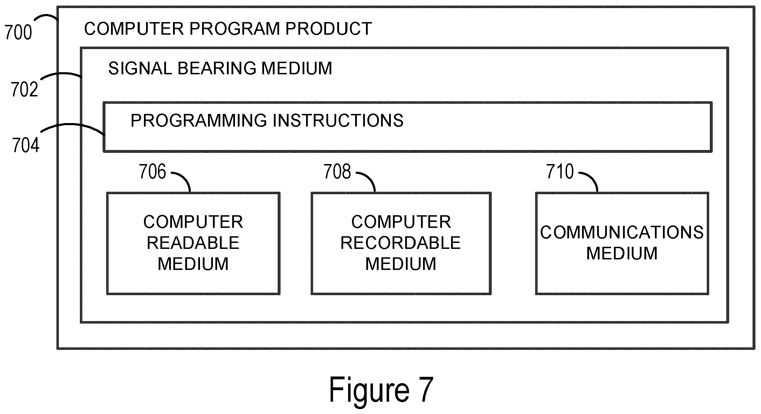

Figure 7 is a schematic illustrating a conceptual partial view of an example computer program product that includes a computer program for executing a computer process on a computing device, arranged according to at least some embodiments presented herein. In some embodiments, the disclosed methods may be implemented as computer program instructions encoded on a non-transitory computer-readable storage media in a machine-readable format, or on other non-transitory media or articles of manufacture.

Example computer program product 700 may be provided using signal bearing medium 702, which may include one or more programming instructions 704 that, when executed by one or more processors may provide functionality or portions of the functionality described above with respect to Figures 1-6. In some examples, signal bearing medium 702 may encompass non-transitory computer-readable medium 706, such as, but not limited to, a hard disk drive, a Compact Disc (CD), a Digital Video Disk (DVD), a digital tape, memory, etc. In some implementations, signal bearing medium 702 may encompass a computer recordable medium 708, such as, but not limited to, memory, read/write (R/W) CDs, R/W DVDs, etc. In some implementations, signal bearing medium 702 may encompass communications medium 710, such as, but not limited to, a digital and/or an analog communication medium (e.g., a fiber optic cable, a waveguide, a wired communications link, a wireless communication link, etc.). Thus, for example, signal bearing medium 702 may be conveyed by a wireless form of communications medium 710.

One or more programming instructions 704 may be, for example, computer executable and/or logic implemented instructions. In some examples, a computing device (e.g., computer system 112 of Figure 1) may be configured to provide various operations, functions, or actions in response to programming instructions 704 conveyed to computer system 112 by one or more of non-transitory computer readable medium 706, computer recordable medium 708, and/or communications medium 710.

Non-transitory computer readable medium 706 could also be distributed among multiple data storage elements, which could be remotely located from each other. The computing device that executes some or all of the stored instructions could be a vehicle, such as vehicle 200 illustrated in Figure 2A-2D, among other possibilities. Alternatively, the computing device that executes some or all of the stored instructions could be another computing device, such as a server.

The above detailed description describes various features and functions of the disclosed systems, devices, and methods with reference to the accompanying figures. While various aspects and embodiments have been disclosed herein, other aspects and embodiments will be apparent. The various aspects and embodiments disclosed herein are for purposes of illustration and are not intended to be limiting, with the true scope being indicated by the following claims.

It should be understood that arrangements described herein are for purposes of example only. As such, those skilled in the art will appreciate that other arrangements and other elements (e.g. machines, apparatuses, interfaces, functions, orders, and groupings of functions, etc.) can be used instead, and some elements may be omitted altogether according to the desired results. Further, many of the elements that are described are functional entities that may be implemented as discrete or distributed components or in conjunction with other components, in any suitable combination and location. The specification includes the following subject-matter, expressed in the form of clauses 1-22.
1. A method comprising:
   receiving, by an autonomy system coupled to a vehicle, sensor data obtained by one or more sensors as the vehicle navigates a path in an environment, wherein the autonomy system comprises one or more compute cores and a plurality of sensors;
   determining, by the autonomy system and based on the sensor data, information corresponding to one or more objects detected in the environment;
   estimating, based on the information corresponding to one or more objects, one or more conditions expected for a threshold duration during subsequent navigation of the path;
   adjusting, by the autonomy system, operation of one or more components of the autonomy system based on the one or more conditions expected for the threshold duration and respective power consumption data corresponding to the one or more components; and
   controlling the vehicle based on subsequent sensor data obtained after adjusting operation of the one or more components of the autonomy system.
2. The method of clause 1, wherein receiving sensor data obtained by one or more sensors comprises:
   receiving sensor data from a set of sensors;
   wherein estimating one or more conditions expected for the threshold duration comprises:
      estimating a decrease in traffic along at least one side of the vehicle for the threshold duration; and
      wherein adjusting operation of one or more components of the autonomy system comprises:
         reducing power consumption by the set of sensors and one or more corresponding compute cores that process sensor data obtained by the set of sensors.
3. The method of clause 1, wherein estimating one or more conditions expected for the threshold duration comprises:
   estimating a decrease in visibility in the environment expected for the threshold duration; and
   wherein adjusting operation of one or more components of the autonomy system comprises:
      increasing power consumption by one or more particular sensors and one or more corresponding compute cores that process sensor data obtained by the one or more particular sensors.
4. The method of clause 3, wherein increasing power consumption by the one or more particular sensors comprises:
   switching one or more radar units from a low power state to a high power state.
5. The method of any of clauses 1-4, wherein adjusting one or more components of the autonomy system comprises:
   adjusting a frequency of a compute cooling system, wherein the compute cooling system is configured to reduce an operational temperature of at least one compute core.
6. The method of any of clauses 1-5, wherein adjusting one or more components of the autonomy system comprises:
   adjusting a frequency of a sensor cleaning system, wherein the sensor cleaning system is configured to clean one or more sensors of the plurality of sensors.
7. The method of any of clauses 1-6, further comprising:
   determining a battery level corresponding to the vehicle, wherein the vehicle is an electric vehicle; and
   wherein adjusting operation of one or more components of the autonomy system further comprises:
      adjusting operation of the one or more components of the autonomy system further based on the battery level corresponding to the vehicle and a total distance remaining until the vehicle reaches a predefined destination.
8. The method of any of clauses 1-7, further comprising:
   determining a fuel level corresponding to the vehicle; and
   wherein adjusting operation of one or more components of the autonomy system further comprises:
      adjusting operation of the one or more components of the autonomy system further based on the fuel level corresponding to the vehicle and a total distance remaining until the vehicle reaches a predefined destination.
9. The method of any of clauses 1-8, wherein receiving sensor data obtained by one or more sensors comprises:
   receiving point cloud data from a lidar coupled to the vehicle; and
   wherein adjusting operation of one or more components of the autonomy system comprises:
      reducing one or both of a frequency or a range of the lidar for at least the threshold duration.
10. The method of any of clauses 1-9, wherein adjusting operation of one or more components of the autonomy system further comprises:
   reducing a power consumption of one or more actuators.
11. The method of any of clauses 1-10, wherein estimating one or more conditions expected for the threshold duration comprises:
   inputting the sensor data into a machine learned model; and
   wherein adjusting operation of one or more components of the autonomy system comprises:
      adjusting operation of a plurality of components of the autonomy system based on an output from the machine learned model.
12. A vehicle comprising:
   an autonomy system comprising one or more compute cores and a plurality of sensors, wherein the autonomy system is configured to:
   receive sensor data obtained by one or more sensors as the vehicle navigates a path in an environment;
   determine, based on the sensor data, information corresponding to one or more objects detected in the environment;
   estimate, based on the information corresponding to one or more objects, one or more conditions expected for a threshold duration during subsequent navigation of the path;
   adjust operation of one or more components of the autonomy system based on the one or more conditions expected for the threshold duration and respective power consumption data corresponding to the one or more components; and
   control the vehicle based on subsequent sensor data obtained after adjusting operation of the one or more components of the autonomy system.
13. The vehicle of clause 12, wherein the autonomy system is configured to estimate a decrease in traffic in the environment of the vehicle; and
   reduce power consumption by both a set of sensors and one or more corresponding compute cores that process sensor data obtained by the set of sensors.
14. The vehicle of clause 12 or 13, wherein the autonomy system is configured to estimate an increase in visibility in the environment and responsively decrease power consumption by one or more sensors and one or more corresponding compute cores that process sensor data obtained by the one or more sensors.
15. The vehicle of clause 12 or 13, wherein the autonomy system is configured to:
   estimate a decrease in visibility in the environment; and
   based on the estimated decrease in visibility in the environment, transition a radar from a low power consumption state to a high power consumption state.
16. The vehicle of any of clauses 12-15, wherein the autonomy system is further configured to:
   detect precipitation in the environment; and
   adjust, based on detecting precipitation in the environment, a frequency of a sensor cleaning process at one or more sensors.
17. The vehicle of any of clauses 12-16, further comprising a battery; and
   wherein the autonomy system is further configured to:
   determine an energy level remaining in the battery; and
   adjust power consumption at one or more components of the autonomy system based on the energy level remaining in the battery.
18. The vehicle of any of clauses 12-17, wherein the autonomy system is further configured to:
   based on estimating a transition from a low confidence environment to a high confidence environment, transitioning one or more lidars from a high power consumption state to a low power consumption state.
19. The vehicle of any of clauses 12-18, wherein the autonomy system is further configured to:
   adjust the threshold duration based on a speed of the vehicle.
20. A non-transitory computer readable medium configured to store instructions, that when executed by an autonomy system, causes the autonomy system to perform operations comprising:
   receiving sensor data obtained by one or more sensors as a vehicle navigates a path in an environment, wherein the autonomy system comprises one or more compute cores and a plurality of sensors;
   determining, based on the sensor data, information corresponding to one or more objects detected in the environment;
   estimating, based on the information corresponding to one or more objects, one or more conditions expected for a threshold duration during subsequent navigation of the path;
   adjusting operation of one or more components of the autonomy system based on the one or more conditions expected for the threshold duration and respective power consumption data corresponding to the one or more components; and
   controlling the vehicle based on subsequent sensor data obtained after adjusting operation of the one or more components of the autonomy system.
21. A non-transitory computer readable medium configured to store instructions, that when executed by an autonomy system, causes the autonomy system to perform operations comprising the method of any of clauses 1-11.
22. Computer executable instructions which, when executed by at least one computing apparatus, cause the method of any of clauses 1-11 to be performed.

## Claims

1. A method comprising:
receiving, by an autonomy system coupled to a vehicle, sensor data obtained by one or more sensors as the vehicle navigates a path in an environment, wherein the autonomy system comprises one or more compute cores and a plurality of sensors;
determining, by the autonomy system and based on the sensor data, information corresponding to one or more objects detected in the environment;
estimating, based on the information corresponding to one or more objects, one or more conditions expected for a threshold duration during subsequent navigation of the path;
adjusting, by the autonomy system, operation of one or more components of the autonomy system based on the one or more conditions expected for the threshold duration and respective power consumption data corresponding to the one or more components; and
controlling the vehicle based on subsequent sensor data obtained after adjusting operation of the one or more components of the autonomy system.

2. The method of claim 1, wherein receiving sensor data obtained by one or more sensors comprises:
receiving sensor data from a set of sensors;
wherein estimating one or more conditions expected for the threshold duration comprises:
estimating a decrease in traffic along at least one side of the vehicle for the threshold duration; and
wherein adjusting operation of one or more components of the autonomy system comprises:
reducing power consumption by the set of sensors and one or more corresponding compute cores that process sensor data obtained by the set of sensors.

3. The method of claim 1, wherein estimating one or more conditions expected for the threshold duration comprises:
estimating a decrease in visibility in the environment expected for the threshold duration; and
wherein adjusting operation of one or more components of the autonomy system comprises:
increasing power consumption by one or more particular sensors and one or more corresponding compute cores that process sensor data obtained by the one or more particular sensors.

4. The method of claim 3, wherein increasing power consumption by the one or more particular sensors comprises:
switching one or more radar units from a low power state to a high power state.

5. The method of any preceding claim, wherein adjusting one or more components of the autonomy system comprises:
adjusting a frequency of a compute cooling system, wherein the compute cooling system is configured to reduce an operational temperature of at least one compute core; and/or
adjusting a frequency of a sensor cleaning system, wherein the sensor cleaning system is configured to clean one or more sensors of the plurality of sensors.

6. The method of any preceding claim,
wherein the method further comprises:
determining a battery level corresponding to the vehicle, wherein the vehicle is an electric vehicle; and
wherein adjusting operation of one or more components of the autonomy system further comprises: adjusting operation of the one or more components of the autonomy system further based on the battery level corresponding to the vehicle and a total distance remaining until the vehicle reaches a predefined destination;
or wherein the method further comprises:
determining a fuel level corresponding to the vehicle; and
wherein adjusting operation of one or more components of the autonomy system further comprises: adjusting operation of the one or more components of the autonomy system further based on the fuel level corresponding to the vehicle and a total distance remaining until the vehicle reaches a predefined destination.

7. The method of any preceding claim,
wherein adjusting operation of one or more components of the autonomy system further comprises: reducing a power consumption of one or more actuators; and/or
wherein receiving sensor data obtained by one or more sensors comprises:
receiving point cloud data from a lidar coupled to the vehicle; and
wherein adjusting operation of one or more components of the autonomy system comprises: reducing one or both of a frequency or a range of the lidar for at least the threshold duration.

8. The method of any preceding claim, wherein estimating one or more conditions expected for the threshold duration comprises:
inputting the sensor data into a machine learned model; and
wherein adjusting operation of one or more components of the autonomy system comprises:
adjusting operation of a plurality of components of the autonomy system based on an output from the machine learned model.

9. A vehicle comprising:
an autonomy system comprising one or more compute cores and a plurality of sensors, wherein the autonomy system is configured to:
receive sensor data obtained by one or more sensors as the vehicle navigates a path in an environment;
determine, based on the sensor data, information corresponding to one or more objects detected in the environment;
estimate, based on the information corresponding to one or more objects, one or more conditions expected for a threshold duration during subsequent navigation of the path;
adjust operation of one or more components of the autonomy system based on the one or more conditions expected for the threshold duration and respective power consumption data corresponding to the one or more components; and
control the vehicle based on subsequent sensor data obtained after adjusting operation of the one or more components of the autonomy system.

10. The vehicle of claim 9, wherein the autonomy system is configured to estimate a decrease in traffic in the environment of the vehicle; and
reduce power consumption by both a set of sensors and one or more corresponding compute cores that process sensor data obtained by the set of sensors.

11. The vehicle of claim 9 or 10,
wherein the autonomy system is configured to estimate an increase in visibility in the environment and responsively decrease power consumption by one or more sensors and one or more corresponding compute cores that process sensor data obtained by the one or more sensors; or
wherein the autonomy system is configured to:
estimate a decrease in visibility in the environment; and
based on the estimated decrease in visibility in the environment, transition a radar from a low power consumption state to a high power consumption state.

12. The vehicle of any of claims 9-11, wherein the autonomy system is further configured to:
detect precipitation in the environment; and
adjust, based on detecting precipitation in the environment, a frequency of a sensor cleaning process at one or more sensors.

13. The vehicle of any of claims 9-12, further comprising a battery; and
wherein the autonomy system is further configured to:
determine an energy level remaining in the battery; and
adjust power consumption at one or more components of the autonomy system based on the energy level remaining in the battery.

14. The vehicle of any of claims 9-13, wherein the autonomy system is further configured to:
based on estimating a transition from a low confidence environment to a high confidence environment, transitioning one or more lidars from a high power consumption state to a low power consumption state; and/or
adjust the threshold duration based on a speed of the vehicle.

15. A non-transitory computer readable medium configured to store instructions, that when executed by an autonomy system, causes the autonomy system to perform operations comprising:
receiving sensor data obtained by one or more sensors as a vehicle navigates a path in an environment, wherein the autonomy system comprises one or more compute cores and a plurality of sensors;
determining, based on the sensor data, information corresponding to one or more objects detected in the environment;
estimating, based on the information corresponding to one or more objects, one or more conditions expected for a threshold duration during subsequent navigation of the path;
adjusting operation of one or more components of the autonomy system based on the one or more conditions expected for the threshold duration and respective power consumption data corresponding to the one or more components; and
controlling the vehicle based on subsequent sensor data obtained after adjusting operation of the one or more components of the autonomy system.
